# EUROPEAN PATENT SPECIFICATION

(11) **EP 1 281 313 B1**
(45) Date of publication and mention of the grant of the patent: **12.04.2006**
(21) Application number: 02016809.2
(22) Date of filing: 26.07.2002
(51) Int. Cl.: A01G 7/06, A01G 17/02

(54) **Method for combating vineyard esca disease**
Verfahren zur Bekämpfung des Esca-Syndroms der Rebe
Méthode pour combattre l'esca de la vigne

(30) Priority: 01.08.2001 IT MO20010161
(43) Date of publication of application: 05.02.2003
(73) Proprietor: Pollastri Gianni, 41011 Campogalliano (Prov. of Modena) (IT)
(72) Inventor: Pollastri Gianni, 41011 Campogalliano (Prov. of Modena) (IT)
(74) Representative: Modiano, Micaela Nadia

(56) References cited:
- US-A- 4 112 616
- DR. W. K. KAST: "Das Esca-Syndrom, eine auffällige Erkrankung einzelner Rebstöcke" 12 April 2002 (2002-04-12), XP002263047 Retrieved from the Internet: <URL:http://www.infodienst-mlr.bwl.de/la/l vwo/veroeff/Esca.htm> [retrieved on 2003-11-27]
- CLAUDIO FABBRO: "Come difendersi dal mal dell'esca senza l'arsenito sodico" 3 June 2002 (2002-06-03), XP002263048 Retrieved from the Internet: <URL:http://www.natisone.it/vini/medico/me dico05.htm> [retrieved on 2003-11-27]
- FABIO OSTI AND STEFANO DI MARCO: "Il mal dell'esca è ancora un'emergenza nei vigneti" AGRICOLTURA, [Online] vol. 31, no. 6, June 2003 (2003-06), pages 68-69, XP002263049 BOLOGNA, IT Retrieved from the Internet: <URL:http://www.regione.emilia-romagna.it/ agricoltura/rivista/2003/06/ra030668.pdf> [retrieved on 2003-11-27]

## Description

The present invention relates to a method for combating vineyard esca disease.

Esca disease is a fungal degenerative disease that affects grapevines.

The disease is caused by various fungi, which once they have penetrated the grapevine and settled inside it, attack the sap system and atrophy it, preventing the plant from living.

The symptoms with which the disease becomes apparent are the appearance of chlorotic spots and desiccation of leaf tissue, which extend gradually, starting from the edges of the leaves, until they affect all the internerval tissue, the transformation of the woody tissues into a spongy and brittle mass, and the appearance of brown spots on the grapes.

The disease, which can have an incubation period of a few years, can have a chronic course, which over time leads to dieback and to a drop in production, or an acute course, which in a few days leads to growth collapse, with wilting and desiccation of the leaves and bunches.

Esca disease is a contagious disease that can propagate by mechanical transmission, i.e. by contact between diseased tissues of infected plants, or anything that has come into contact with them, and healthy plants.

The vehicles for transmission of the fungal spores can be the most disparate: shears used for pruning, tools such as sprayers and the like, friction between leaves or shoots, contact with workers or animals, or the like.

Currently, there are no effective methods for combating esca disease; the applicable national statutory provisions in fact do not allow to apply specific fungicidal treatments based on sodium arsenite because they are excessively noxious for human beings and for the environment.

Only preventive measures are known which are aimed not at preventing the disease from attacking the plants, which is currently impossible, but at trying to prevent it from spreading to other plants.

These measures are essentially two: treating the sick plants separately from the others or, more drastically, eliminating them.

For example, if a plant that is even just partially infected is found in a vineyard, it is necessary to mark it with paints, ribbons or the like and highlight it on the vineyard map, so that all maintenance and cultivation treatments (spraying, tying, pruning, harvesting) are performed first on all the healthy plants and on any healthy portion of the infected plant and only at the very end on the diseased plant or plant part, taking care to disinfect the tools after use and to burn any removed parts in order to prevent diffusion of the spores of the fungi.

Therefore, maintenance and cultivation operations become disadvantageously complicated, long and onerous, and require the intervention of expert and careful operators.

In the worst cases, the sick plants are cut down and eliminated, taking care to uproot completely their root system, to incinerate the removed stump and to allow the ground to rest for a few years.

In this case, the economic losses are extremely severe and heavy; one should consider in fact that a plant matures and becomes productive only after a few years of cultivation, during which it has been only a source of expenses and of no profit.

The aim of the present invention is to eliminate the drawbacks noted above, providing a method for combating vineyard esca disease that allows to eliminate esca disease and prevent its propagation from sick plants to healthy plants, to simplify the operations for cultivating and maintaining the vineyards, to reduce their execution times and costs, and to heal infected plants while respecting the environment and human safety.

Another object of the present invention is to provide a method that allows to recover sick plants, avoiding the need to cut them down, thus containing the economic losses affecting viticulturist.

Within the scope of this technical aim, another object of the present invention is to achieve the above aim and object with a structure that is simple, relatively easy to provide in practice, safe in use, effective in operation, and relatively modest in cost.

This aim and these objects are all achieved by the present method for combating vineyard esca disease, characterized in that it consists in producing, in the woody organs of grapevines affected by esca disease, upstream of their sick portions, at least one lesion that is suitable to interrupt at least partially the flow of sap between the healthy portions and the sick portions, and in keeping said lesion substantially open.

Further characteristics and advantages of the present invention will become apparent from the detailed description of a preferred but not exclusive embodiment of the method for combating vineyard esca disease, illustrated only by way of non-limitative example in the accompanying drawings, wherein:
Figure 1 is a schematic view of a grapevine affected by esca disease, having a lesion line of the method according to the invention near the sick portion of said grapevine;
Figure 2 is an enlarged-scale schematic view of a detail of the plant of Figure 1, in which the lesion of the method according to the invention has been provided;
Figure 3 is an axonometric view of the healthy portion of the plant of Figure 2 near the lesion;
Figure 4 is a schematic view of an alternative embodiment of the lesion of the method according to the invention.

With particular reference to the above figures, the reference numeral 1 generally designates a sick portion of a grapevine P affected by esca disease.

Esca disease is caused by certain fungi that penetrate the woody organ of the sick portion 1, attack and necrotize the sap system, and convert the wood into a spongy, brittle and dry mass.

The leaves F of the sick portion 1 exhibit yellow-brown or red-brown spots and desiccation of the tissues, which start from the margins and extend centripetally until they affect the internerval tissue; the leaves F lose their turgor, sag and dry and then fall to the ground.

The bunches G of the sick portion 1 have dark areas, wilt and become desiccated.

The leaves F' and the bunches G' of the healthy portion 2 of the plant P are instead turgid and have a normal coloring, while the woody organs of the healthy portion 2 are compact and alive.

The method according to the invention consists in providing, upstream of the sick portion 1, in the region that separates it from the healthy portion 2, at least one transverse lesion 3 whose extension and/or depth are such as to interrupt at least partially the flow of sap between the healthy portion 2 and the sick portion 1.

The lesion 3 can be provided near the sick portion 1 or in the intermediate region between the healthy portion 2 and the sick portion 1 (as shown) or at the base of the healthy trunk 4 of the plant P; in any case, it is essential that the lesion 3 affect the healthy portion 2 of the plant P.

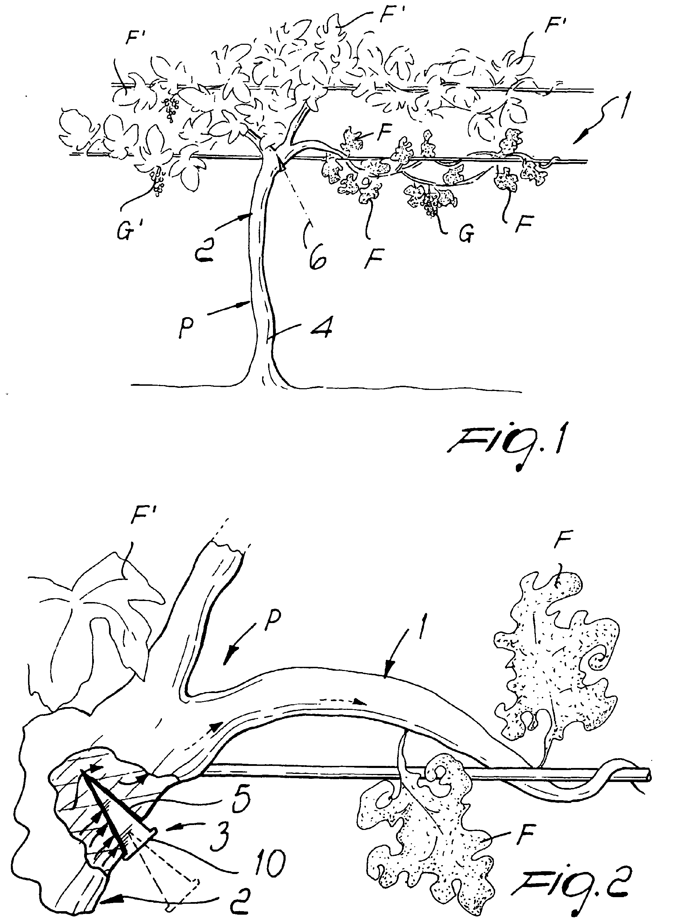

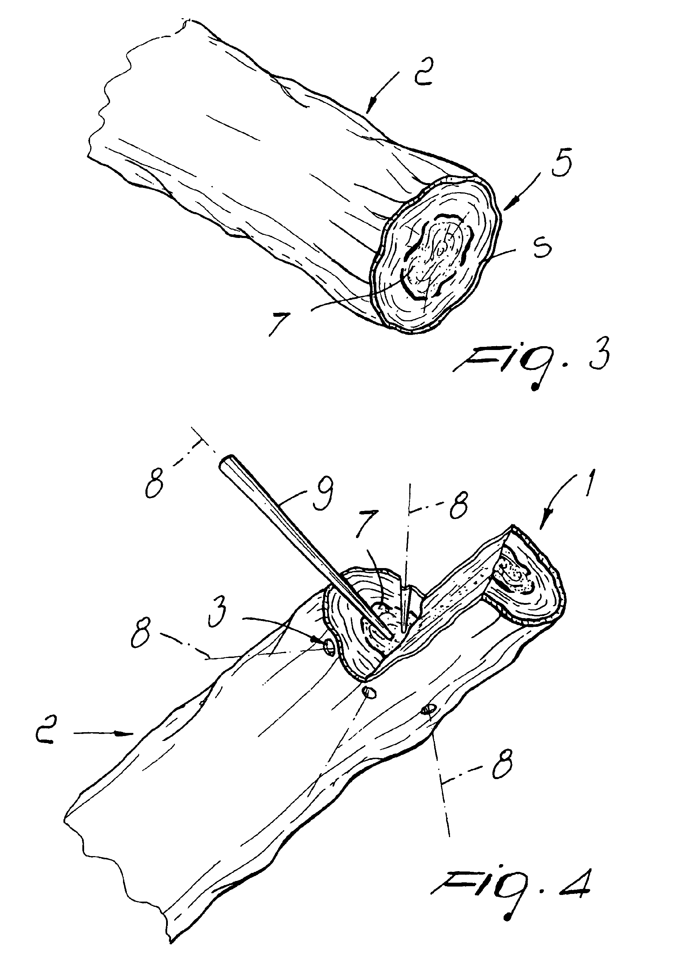

In Figures 1 to 3, the lesion is constituted by a cut 5 that runs transversely to the longitudinal extension of the woody organ of the sick portion 1; in Figure 1, the reference numeral 6 designates the trace of the cutting line, and Figure 3 illustrates the cutting surface S of the healthy portion 2.

The cut 5 affects an area of the surface S such as to interrupt the continuity of the sap-containing pith 7 between the healthy portion 2 and the sick portion 1.

As an alternative, the lesion 3 can be constituted by a plurality of canalicular paths that lie transversely to the longitudinal extension of the woody organ of the sick portion 1, shown by the traces 8 in Figure 4, which can be obtained for example by using an awl 9.

The awl 9 is inserted at a depth such as to reach and interrupt the sap-containing pith 7.

The method according to the invention furthermore consists in keeping open the lesion 3 provided so as to slow its healing.

In the case of the cut 5, it is possible for example to insert between the cut surface S of the healthy portion 2 and the corresponding cut surface of the sick portion 1 an insert, constituted by a lamina 10, or to cover said surfaces with a layer of material suitable for slowing healing.

Likewise, in the case of canalicular paths, it is possible to line their internal walls with materials suitable for slowing their healing or introducing therein inserts that have the same function.

The lesion 3 produced with the method according to the invention interrupts at least partially the vital functions of the sick portion 1 and also partially of the healthy portion 2, allowing them to survive in critical conditions; the fungi lose their nutrition, suffer and gradually disappear without infesting the healthy portion 2.

The sick portion 1 loses the sick leaves F and heals; it is therefore not necessary to eliminate it or to uproot the entire plant P.

Once the sick portion 1 has healed, the plant P is healthy and can be subjected to pruning, tying or other treatment simultaneously with the other plants and without having to adopt particular precautionary measures.

In practice it has been found that the described invention achieves the proposed aim and objects, i.e. to provide a method that allows to eliminate vineyard esca disease simply and effectively, to heal and recover infected plans, limiting economic losses affecting viticulturists, and to respect the environment and human health.

In practice, the materials used, as well as the shapes and the dimensions, may be any according to the requirements without thereby abandoning the scope of the protection of the claims that follow.

## Claims

1. A method for combating vineyard esca disease, **characterized in that** it consists in producing, in the woody organs of grapevines affected by esca disease, upstream of their sick portions, at least one lesion that is suitable for interrupting at least partially the flow of sap between the healthy portions and the sick portions, and in keeping said lesion substantially open.

2. The method according to claim 1, **characterized in that** said lesion is of a kind that is substantially transverse to said woody organs.

3. The method according to one or more of the preceding claims, **characterized in that** said lesion is provided near said sick portions.

4. The method according to claims 1 and 2, **characterized in that** said lesion is formed at the regions that are intermediate between said healthy portions and said sick portions.

5. The method according to claims 1 and 2, **characterized in that** said lesion is provided substantially at the base of said plants.

6. The method according to one or more of the preceding claims, **characterized in that** said lesion is constituted by a cut.

7. The method according to one or more of the preceding claims, **characterized in that** said lesion is constituted by a canalicular path.

8. The method according to one or more of the preceding claims, **characterized in that** said keeping said lesion substantially open consists in interposing, between the lips of the lesion, an insert that is suitable for slowing its healing.

9. The method according to claim 8, **characterized in that** said insert is constituted by a lamina.

10. The method according to one or more of the preceding claims, **characterized in that** said keeping said lesion substantially open consists in covering its lips with a layer of material suitable for slowing its healing.

## Patentansprüche

1. Ein Verfahren zur Bekämpfung von Weinstock-Esca-Krankheit, **dadurch gekennzeichnet, dass** es darin besteht, in den holzigen Organen von Weinstöcken, die von der Esca-Krankheit befallen sind, flussaufwärts von ihren erkrankten Teilen wenigstens eine Verletzung, welche zur wenigstens teilweise Unterbrechung des Saftflusses zwischen den gesunden Teilen und den erkrankten Teilen geeignet ist, herzustellen und besagte Verletzung im Wesentlichen offen zu halten.

2. Das Verfahren nach Anspruch 1, **dadurch gekennzeichnet, dass** besagte Verletzung von einer Art ist, welche im Wesentlichen quer liegend zur besagten holzigen Organen ist.

3. Das Verfahren nach einem oder mehreren der vorhergehenden Ansprüche, **dadurch gekennzeichnet, dass** sich besagte Verletzung nahe besagter erkrankter Teile befindet.

4. Das Verfahren nach Ansprüchen 1 und 2, **dadurch gekennzeichnet, dass** besagte Verletzung in den Bereichen ausgebildet ist, welche sich zwischen besagten gesunden Teilen und besagten erkrankten Teilen befinden.

5. Das Verfahren nach Ansprüchen 1 und 2, **dadurch gekennzeichnet, dass** sich besagte Verletzung im Wesentlichen an der Basis von besagten Pflanzen befindet.

6. Das Verfahren nach einem oder mehreren der vorhergehenden Ansprüche, **dadurch gekennzeichnet, dass** besagte Verletzung durch einen Schnitt begründet wird.

7. Das Verfahren nach einem oder mehreren der vorhergehenden Ansprüche, **dadurch gekennzeichnet, dass** besagte Verletzung durch einen kanalikulären Gang begründet wird.

8. Das Verfahren nach einem oder mehreren der vorhergehenden Ansprüche, **dadurch gekennzeichnet, dass** besagtes im Wesentlichen Offenhalten von besagter Verletzung darin besteht, zwischen die Ränder der Wunde einen Einsatz einzufügen, welcher geeignet ist, ihre Heilung zu verlangsamen.

9. Das Verfahren nach nach Anspruch 8, **dadurch gekennzeichnet, dass** besagter Einsatz durch eine Platte gebildet wird.

10. Das Verfahren nach einem oder mehreren der vorhergehenden Ansprüche, **dadurch gekennzeichnet, dass** besagtes im Wesentlichen Offenhalten von besagter Verletzung darin besteht, ihre Ränder mit einer Schicht aus Material, welches geeignet ist, ihren Heilprozess zu verlangsamen, zu bedecken.

## Revendications

1. Procédé pour combattre l'esca de la vigne, **caractérisé en ce qu'**il consiste à produire, dans les organes ligneux des vignes touchées par l'esca, en amont de leurs parties malades, au moins une lésion qui est en mesure d'interrompre au moins partiellement l'écoulement de sève entre les parties saines et les parties malades, et à maintenir ladite lésion sensiblement ouverte.

2. Procédé selon la revendication 1, **caractérisé en ce que** ladite lésion est du type sensiblement transversal auxdits organes ligneux.

3. Procédé selon une ou plusieurs des revendications précédentes, **caractérisé en ce que** ladite lésion est fournie près desdites parties malades.

4. Procédé selon les revendications 1 et 2, **caractérisé en ce que** ladite lésion est formée au niveau des régions intermédiaires entre lesdites parties saines et lesdites parties malades.

5. Procédé selon les revendications 1 et 2, **caractérisé en ce que** ladite lésion est fournie sensiblement à la base desdites plantes.

6. Procédé selon une ou plusieurs des revendications précédentes, **caractérisé en ce que** ladite lésion est constituée d'une entaille.

7. Procédé selon une ou plusieurs des revendications précédentes, **caractérisé en ce que** ladite lésion est constituée d'une voie canaliculaire.

8. Procédé selon une ou plusieurs des revendications précédentes, **caractérisé en ce que** ledit maintien de ladite lésion sensiblement ouverte consiste à interposer, entre les lèvres de ladite lésion, un rapiéçage en mesure de ralentir sa guérison.

9. Procédé selon la revendication 8, **caractérisé en ce que** ledit rapiéçage est constitué d'une plaque mince.

10. Procédé selon une ou plusieurs des revendications précédentes, **caractérisé en ce que** ledit maintien de ladite lésion sensiblement ouverte consiste à recouvrir ses lèvres d'une couche d'un matériau en mesure de ralentir sa guérison.
